# EUROPÄISCHE PATENTSCHRIFT

(11) **EP 3 724 046 B1**
(45) Veröffentlichungstag und Bekanntmachung des Hinweises auf die Patenterteilung: **09.03.2022**
(21) Anmeldenummer: 18827001.1
(22) Anmeldetag: 13.12.2018
(51) Int. Cl.: B60T 13/66

(54) **BREMSSYSTEM MIT EINER KORREKTURVORRICHTUNG EINER ÖFFNUNGSZEIT EINES VENTILS UND VERFAHREN ZUM KORRIGIEREN DER ÖFFNUNGSZEIT DES VENTILS**
BRAKING SYSTEM HAVING A CORRECTION DEVICE FOR CORRECTING AN OPENING TIME OF A VALVE AND METHOD FOR CORRECTING THE OPENING TIME OF THE VALVE
SYSTÈME DE FREINAGE COMPORTANT UN DISPOSITIF DE CORRECTION DU TEMPS D'OUVERTURE D'UNE SOUPAPE ET PROCÉDÉ DE CORRECTION DU TEMPS D'OUVERTURE DE LA SOUPAPE

(30) Priorität: 15.12.2017 DE 102017222954
(43) Veröffentlichungstag der Anmeldung: 21.10.2020
(73) Patentinhaber: KNORR-BREMSE Systeme für Schienenfahrzeuge GmbH, 80809 München (DE)
(72) Erfinder: HARTL, Severin, 82449 Uffing am Staffelsee (DE); RASEL, Thomas, 85635 Höhenkirchen-Siegertsbrunn (DE)
(86) Internationale Anmeldenummer: PCT/EP2018/084692
(87) Internationale Veröffentlichungsnummer: WO 2019/115673

(56) Entgegenhaltungen:
- WO-A1-2017/194512
- DE-A1- 10 053 606
- DE-B3-102006 001 551
- US-A1- 2013 261 857

## Beschreibung

Die Erfindung betrifft ein Bremssystem mit einer Korrekturvorrichtung einer Öffnungszeit eines Ventils und ein Verfahren zum Korrigieren der Öffnungszeit des Ventils, und insbesondere ein Bremssystem für Schienenfahrzeuge.

Bremsen von Schienenfahrzeugen werden üblicherweise über ein pneumatisches Bremssystem betätigt, das von einer Steuer- oder Regeleinrichtung angesteuert wird. Um die Funktion des Bremssystems zu realisieren werden entwicklungsseitig modellbasierte Drucksteuerungen oder -regelungen erstellt. Dabei werden effektive Ventilöffnungszeiten, also Zeiten, zu denen das Ventil tatsächlich geöffnet ist, für eine gewünschte Änderung eines Zieldrucks berechnet. Für diese Berechnung werden charakteristische Kenngrößen, also Parameter, einer pneumatischen Strecke, wie etwa das Volumen und der pneumatische Leitwert verwendet.

Dabei kann, bei Verwendung von Drucksteuerungen, der Druck bei einem ungünstigen Ventilverhalten oder einer unpassenden Parametrierung an einem Arbeitspunkt verharren oder sich zu langsam von diesem Arbeitspunkt wegbewegen. Bei der Verwendung von modellbasierten Druckregelungen können sich durch eine falsche Parametrierung bezüglich der pneumatischen Strecke zu kleine oder zu große Druckänderungen pro Regelvorgang ergeben. Dadurch können vermehrte Schaltspiele, eine verringerte Regelgenauigkeit, eine reduzierte Regelgeschwindigkeit oder eine Instabilität entstehen.

Aus diesem Grund wurden die charakteristischen Kenngrößen der pneumatischen Strecke bisher auf Basis von Konstruktionsdaten ermittelt, oder das pneumatische System wurde gezielt auf festgelegte pneumatische Kenngrößen hin ausgelegt. Ferner wurde das pneumatische Zeitverhalten, nämlich die Be- und Entlüftungszeit, für eine gewünschte Druckänderung getestet und auf der Basis dieser Testergebnisse wurden die notwendigen Parameter für die Ansteuerfunktion ermittelt. Dabei konnte jedoch bei modularen Systemen durch verschiedene Komponenten eine große Vielfalt an zu testenden Varianten entstehen.

Dokument WO 2017/194512 A1 offenbart ein gattungsgemäßes Bremssystem mit einer Korrekturvorrichtung einer Öffnungszeit eines Ventils des pneumatischen Bremssystems.

Die Erfindung beruht auf der Aufgabe, die obigen Nachteile zu eliminieren und eine Vorrichtung und ein Verfahren bereitzustellen, die eine erforderliche effektive Ventilöffnungszeit in einem pneumatischen Bremssystem auch bei ungenauen Auslegungsvorgaben oder einer Veränderung des tatsächlichen pneumatischen Systems sicherstellen.

Die Aufgabe wird durch ein Bremssystem mit einer Korrekturvorrichtung einer Ventilöffnungszeit mit den Merkmalen des Anspruchs 1 sowie durch ein Verfahren zum Korrigieren einer Ventilöffnungszeit gemäß Anspruch 6 gelöst. Weiterentwicklungen der Erfindung sind Gegenstand der Unteransprüche.

Das erfindungsgemäße Bremssystem mit der Korrekturvorrichtung einer Ventilöffnungszeit weist eine Signaleingangsschnittstelle für ein Signal einer zuletzt eingegebenen effektiven Ventilöffnungszeit für das Ventil des pneumatischen Bremssystems von einem Steuerungssystem auf. Für eine gewünschte Druckänderung in dem pneumatischen Bremssystem, also für ein Einleiten oder Verstärken, oder Verringern oder Aufheben einer Bremswirkung, wird von dem Steuerungssystem eine vorbestimmte effektive Ventilöffnungszeit vorgegeben, mit der das Ventil angesteuert wird und die über die Signaleingangsschnittstelle in die Korrekturvorrichtung eingegeben wird.

Das Bremssystem enthält ferner eine Signaleingangsschnittstelle für einen Druck vor dem Ventil nach der zuletzt eingegebenen effektiven Ventilöffnungszeit. Über einen Drucksensor wird der Druck vor dem Ventil, also auf einer Seite von dem Ventil, die einer Bremse abgewandt ist, erfasst und ein entsprechendes Drucksignal für einen Druck vor dem Ventil wird über die Signaleingangsschnittstelle in die Vorrichtung eingegeben.

Das erfindungsgemäße Bremssystem enthält darüber hinaus eine Signaleingangsschnittstelle für eine Druckdifferenz zwischen einem Druck nach einer aktuellen Vorgabe der effektiven Ventilöffnungszeit nach dem Ventil und einem Druck nach der zuletzt eingegebenen Vorgabe der effektiven Ventilöffnungszeit nach dem Ventil.

Weiterhin weist das erfindungsgemäße Bremssystem eine Ventilöffnungszeitbestimmungseinrichtung auf, die eine effektive Referenzsystemventilöffnungszeit aus der Druckdifferenz nach dem Ventil, dem Druck vor dem Ventil nach der zuletzt eingegebenen Vorgabe der effektiven Ventilöffnungszeit und einem Parameter des Referenzsystems bestimmt.

Dieser Parameter beruht im Wesentlichen auf einer pneumatischen Konfiguration eines Bremssystems. Der Parameter wird im Voraus für ein entsprechend vorbestimmtes pneumatisches Referenzsystem ermittelt, wobei er beispielsweise als ein Maximum, oder alternativ beispielsweise entsprechend dem tatsächlichen Bremssystem gewählt wird. Ein Maximum bedeutet, dass sich ein Volumen des pneumatischen Systems an einer oberen Grenze befindet und sich Ventilreaktionszeiten an einer "langsamen" Toleranzgrenze befinden. Dies bedeutet, dass ein Druckanstieg während einer Ventilöffnungszeit langsam und die resultierende Druckänderung damit klein ist, oder, von der anderen Seite betrachtet, dass eine längere Ventilöffnungszeit erforderlich ist, um eine vorbestimmte Druckdifferenz zu erlangen. In dem Fall, in dem der Parameter das tatsächliche Bremssystem abbildet, entspricht eine effektive Ventilöffnungszeit des Referenzsystems für eine vorbestimmte Druckdifferenz der theoretischen effektiven Ventilöffnungszeit des tatsächlichen Bremssystems für diese Druckdifferenz. Der Parameter kann auch ein Parameterraum sein, wobei für unterschiedliche Druckdifferenzen unterschiedliche Parameter verwendet werden.

Die effektive Referenzsystemventilöffnungszeit ist diejenige effektive Ventilöffnungszeit, die auf der Basis des Parameters oder des Parameterraums, der die pneumatischen Eigenschaften des Referenzsystems festlegt, aus der Druckdifferenz nach dem Ventil und dem Druck vor dem Ventil nach der zuletzt eingegebenen Vorgabe der effektiven Ventilöffnungszeit für das Referenzsystem bestimmt wird. Wie oben angegeben, wird die effektive Referenzsystemventilöffnungszeit von der Wahl des vorbestimmten pneumatischen Referenzsystems beeinflusst.

Das erfindungsgemäße Bremssystem enthält darüber hinaus noch eine Korrekturzeitbestimmungseinrichtung, die eine Korrekturzeit aus einer Differenz zwischen der von der Steuerungsvorrichtung zuletzt eingegebenen effektiven Ventilöffnungszeit und der effektiven Referenzsystemventilöffnungszeit bestimmt. Beispielsweise kann die Korrekturzeit der Differenz entsprechen.

Die Korrekturzeit wird verwendet, um die vorgegebene effektive Ventilöffnungszeit so zu korrigieren, dass die durch die vorgegebene effektive Ventilöffnungszeit zu erzielende Druckdifferenz erreicht wird.

Dies ergibt sich aus der folgenden grundsätzlichen Überlegung:
Aufgrund der von der Steuerungsvorrichtung vorgegebenen effektiven Ventilöffnungszeit ergibt sich vor und nach einer Eingabe der vorgegebenen effektiven Ventilöffnungszeit eine reale Druckdifferenz nach dem Ventil in dem realen System. Wenn nun diese reale Druckdifferenz in das Referenzsystem eingegeben wird, wird für diese reale Druckdifferenz über das Referenzsystem eine virtuelle effektive Referenzsystemventilöffnungszeit berechnet. Diese virtuelle effektive Referenzsystemventilöffnungszeit besagt, wie lange das Ventil gemäß dem Referenzsystem virtuell geöffnet war, um diese reale Druckdifferenz zu bewirken.

Die Annahme ist nun, dass das Referenzsystem einem theoretischen realen Bremssystem entspricht.

Es wird zunächst der Fall betrachtet, in dem die virtuelle effektive Referenzsystemventilöffnungszeit kürzer als die vorgegebene effektive Ventilöffnungszeit ist.

Dies bedeutet zum einen, dass das reale System doch nicht dem theoretischen realen System (dem Referenzsystem) entspricht, da ansonsten die effektive Referenzsystemventilöffnungszeit der vorgegebenen effektiven Ventilöffnungszeit entsprechen würde. Ferner bedeutet dies, dass die aus der effektiven Ventilöffnungszeit entstandene reale Druckdifferenz aufgrund von beispielsweise einer Störung in dem realen System einer Druckdifferenz entspricht, die in dem Referenzsystem aus einer kürzeren virtuellen effektiven Ventilöffnungszeit (nämlich der effektiven Referenzventilöffnungszeit) entstehen würde. Die reale Druckdifferenz ist also geringer als die entsprechend der vorgegebenen effektiven Ventilöffnungszeit erwartete Druckdifferenz. Somit muss die vorgegebene effektive Ventilöffnungszeit verlängert werden, um die eigentlich erwartete Druckdifferenz zu erreichen. Als Annäherung für eine Korrekturzeit wird die Differenz zwischen der effektiven Ventilöffnungszeit und der effektiven Referenzventilöffnungszeit verwendet.

In einem Fall, in dem die virtuelle effektive Referenzsystemventilöffnungszeit der effektiven Ventilöffnungszeit entspricht, ist keine Korrektur erforderlich.

In dem Fall, in dem die virtuelle effektive Referenzsystemventilöffnungszeit länger als die vorgegebene effektive Ventilöffnungszeit ist, kann daraus geschlossen werden, dass die reale Druckdifferenz größer als beabsichtigt ist, so dass hier ggf. eine Korrektur mittels der Korrekturzeit erforderlich wäre, und die vorgegebene effektive Ventilöffnungszeit verkürzt werden könnte.

Das erfindungsgemäße Bremssystem enthält weiterhin eine Additionseinrichtung, die die Korrekturzeiten zu einer aufsummierten Korrekturzeit aufsummiert, so dass sich die effektive Ventilöffnungszeit bei weiteren Ansteuerzyklen der tatsächlich erforderlichen Ventilöffnungszeit annähert.

Schließlich weist das erfindungsgemäße Bremssystem noch einen Signalausgang auf, über den die aufsummierte Korrekturzeit an das Steuerungssystem ausgegeben wird.

In einer Ausgestaltung ist das Bremssystem vorzugsweise mit einer Signaleingangsschnittstelle für einen Druck nach der zuletzt eingegebenen effektiven Ventilöffnungszeit nach dem Ventil versehen. Hier wird ein Druck nach dem Ventil, also auf einer der Bremse zugewandten Seite von dem Ventil, über einen Drucksensor erfasst und ein entsprechendes Drucksignal für einen Druck nach dem Ventil wird über die Signaleingangsschnittstelle eingegeben.

Weiterhin ist diese Ausgestaltung mit einer Signaleingangsschnittstelle für einen Druck nach der aktuell eingegebenen effektiven Ventilöffnungszeit nach dem Ventil versehen.

Ferner ist eine Speichereinrichtung vorgesehen, in der ein Parameter, der die pneumatischen Eigenschaften eines Referenzsystems festlegt, abgespeichert ist.

Außerdem ist das erfindungsgemäße Bremssystem mit einer Speichereinrichtung versehen, die den Druck vor dem Ventil nach der zuletzt eingegebenen Vorgabe einer effektiven Ventilöffnungszeit abspeichert, um ihn zu gegebener Zeit zur Verfügung zu stellen.

Darüberhinaus ist das erfindungsgemäße Bremssystem mit einer Speichereinrichtung versehen, die den Druck nach dem Ventil nach der zuletzt eingegebenen Vorgabe einer effektiven Ventilöffnungszeit abspeichert, um ihn zu gegebener Zeit zur Verfügung zu stellen.

Das Bremssystem dieser Ausgestaltung weist darüber hinaus eine Berechnungseinrichtung auf, die eine Druckdifferenz nach dem Ventil zwischen dem Druck nach der aktuell eingegebenen effektiven Ventilöffnungszeit und einem Druck nach der zuletzt eingegebenen effektiven Ventilöffnungszeit berechnet, um die Druckdifferenz für die Ventilöffnungszeitbestimmungseinrichtung bereitzustellen.

Vorzugsweise enthält der Parameter in einer weiteren Ausgestaltung des Bremssystems eine Ventilcharakteristik. Durch die Berücksichtigung beispielsweise eines maximalen Ventilquerschnitts, einer Ventilöffnungsgeschwindigkeit und/oder einer Ventilschließgeschwindigkeit wird das tatsächliche System genauer im Referenzsystem abgebildet.

In einer weiteren oder alternativen Ausgestaltung des Bremssystems enthält der Parameter vorzugsweise ein Volumen des Bremssystems nach dem Ventil. Durch Berücksichtigen des Volumens des Bremssystems nach dem Ventil wird das tatsächliche System genauer im Referenzsystem abgebildet.

In einer weiteren oder alternativen Ausgestaltung des Bremssystems enthält der Parameter vorzugsweise einen pneumatischen Leitwert. Durch ein in Betracht ziehen des pneumatischen Leitwerts wird das tatsächliche System genauer im Referenzsystem abgebildet.

In einer weiteren Ausgestaltung des Bremssystems ist der Parameter vorzugsweise so festgelegt, dass pneumatische Eigenschaften (eine "pneumatische Steigung") des Referenzsystems denen des pneumatischen Systems entsprechen.

Sofern das Referenzsystem dem realen Bremssystem zumindest annähernd entspricht, ist es bei dieser Ausgestaltung möglich, dass die Korrektur, wie o.a., für die effektive Ventilöffnungszeit innerhalb eines Zeitschritts erfolgt. Des Weiteren ist es hier sowohl bei einer zu geringen effektiven Ventilöffnungszeit als auch bei einer zu langen effektiven Ventilöffnungszeit möglich, die gewünschte Druckänderung zu erzielen, um zum einen die Funktion sicherzustellen als auch zum anderen einen Luftverbrauch gering zu halten.

In einer weiteren Ausgestaltung der Vorrichtung ist der Parameter vorzugsweise so festgelegt, dass die pneumatischen Eigenschaften des Referenzsystems einem langsamsten akzeptablen pneumatischen System entsprechen.

Bei einer Druckdifferenz, die nach einem Eingeben einer vorgegebenen effektiven Ventilöffnungszeit gemessenen wird, ergibt sich über das Referenzsystem eine virtuelle effektive Referenzöffnungszeit, die der effektiven Ventilöffnungszeit eines tatsächlichen langsamsten Systems entspricht. Die virtuelle effektive Ventilöffnungszeit entspricht also hier der längsten Zeit, die erforderlich sein kann, um die gewünschte Druckdifferenz zu erzielen. Wenn nun die effektive Ventilöffnungszeit an diese virtuelle effektive Ventilöffnungszeit angenähert wird, wird sichergestellt, dass ein funktional ausreichendes Minimum der Druckänderung erreicht wird.

In einem erfindungsgemäßen Verfahren zum Korrigieren einer Ventilöffnungszeit eines Ventils in einem pneumatischen Bremssystem wird zunächst ein Referenzsystem mit einem Parameter, der die pneumatischen Eigenschaften des Referenzsystems festlegt, bestimmt. Dabei besteht, wie o.a., die Möglichkeit den Parameter hinsichtlich spezieller Referenzsysteme auszuwählen. Beispielsweise kann das langsamste akzeptable Referenzsystem, oder ein Referenzsystem, das dem theoretischen tatsächlichen System entspricht, gewählt werden.

Dann wird, nach der zuletzt eingegebenen Vorgabe einer effektiven Ventilöffnungszeit oder gegebenenfalls bei einem ersten Bremsen vor einer ersten Vorgabe der effektiven Ventilöffnungszeit, ein Druck in dem Bremssystem vor dem Ventil erfasst und gespeichert und ein Druck in dem Bremssystem nach dem Ventil erfasst und gespeichert. Für einen Bremsvorgang, für den das Steuerungssystem die effektive Ventilöffnungszeit bestimmt, wird das Ventil mit dieser effektiven Ventilöffnungszeit angesteuert. Anschließend wird nach der aktuell eingegebenen Vorgabe der effektiven Ventilöffnungszeit der Druck in dem Bremssystem nach dem Ventil nochmals erfasst und eine Druckdifferenz nach dem Ventil des Drucks nach der aktuell eingegebenen Vorgabe der effektiven Ventilöffnungszeit und des Drucks nach der zuletzt eingegebenen Vorgabe der effektiven Ventilöffnungszeit bestimmt. Aus der Druckdifferenz in dem Bremssystem nach dem Ventil, dem Druck in dem Bremssystem nach der zuletzt eingegebenen Vorgabe der effektiven Ventilöffnungszeit vor dem Ventil und dem Parameter, der die pneumatischen Eigenschaften des Referenzsystems festlegt, wird dann die effektive Referenzventilöffnungszeit festgelegt. Daraufhin wird in Abhängigkeit von einer Differenz zwischen der effektiven Ventilöffnungszeit und der effektiven Referenzventilöffnungszeit eine Korrekturzeit bestimmt.

Dies kann beispielsweise ein fester Zeitwert sein, der in Abhängigkeit davon, ob die effektive Ventilöffnungszeit größer als die effektive Referenzventilöffnungszeit ist, oder die effektive Ventilöffnungszeit kleiner als die effektive Referenzventilöffnungszeit ist, ein positives oder negatives Vorzeichen aufweist. Diese Korrekturzeit wird dann zu einer aufsummierten Korrekturzeit aufsummiert und die aufsummierte Korrekturzeit wird ausgegeben, wobei dann die von dem Steuerungssystem ausgegebene effektive Ventilöffnungszeit mit der aufsummierten Korrekturzeit korrigiert wird.

Über die Korrekturzeit kann sowohl eine unpassende effektive Öffnungszeit des Ventils als auch eine vom Referenzsystem abweichende "pneumatische Steigung" kompensiert werden. Sofern die tatsächliche "pneumatische Steigung" der des Referenzsystems entspricht, erfolgt eine Kompensation für die effektive Öffnungszeit innerhalb eines Schritts, d.h. nach einer einzigen Vorgabe der effektiven Ventilöffnungszeit.

Ferner ist eine Parametrierung der Software bezüglich der Geschwindigkeit des pneumatischen Systems nicht zwingend notwendig. Es muss lediglich sichergestellt werden, dass die Geschwindigkeit des zu steuernden oder zu regelnden pneumatischen Systems innerhalb definierter Grenzen liegt.

In einer vorteilhaften Weiterbildung des Verfahrens wird die Korrekturzeit als eine Differenz zwischen der effektiven Ventilöffnungszeit und der effektiven Referenzventilöffnungszeit bestimmt. Dadurch ist es möglich, die effektive Ventilöffnungszeit möglichst schnell an die effektive Referenzventilöffnungszeit anzugleichen, so dass schnell eine sichere Funktion gewährleistet ist.

Gemäß einer weiteren vorteilhaften Weiterbildung des Verfahrens wird ein Anfangswert für die effektive Ventilöffnungszeit mit einer Zeitkonstante bestimmt, die einem schnellsten zu erwartenden pneumatischen System entspricht, was eine kürzest-mögliche Ventilöffnungszeit ergibt. Dadurch wird erreicht, dass ein Druck nach dem Ventil in einem ersten Zyklus des Korrekturverfahrens nicht übermäßig ansteigt (so dass er schlimmstenfalls sogar über einen maximal erforderlichen Druck läge), wobei ein Annähern an den tatsächlich erforderlichen Druck ohne Überschwingen möglich ist, und das Annähern zügig erfolgt und ein Luftverbrauch geringer ist.

Wenn gemäß einer vorteilhaften Weiterbildung des Verfahrens der Parameter des Referenzsystems so gewählt wird, dass er einem tatsächlichen pneumatischen System entspricht, kann die Korrektur so erfolgen, dass die effektive Ventilöffnungszeit der effektiven Referenzventilöffnungszeit entspricht, was verhindert, dass ein zu hoher Druck nach dem Ventil vorliegt und damit den Druckluftverbrauch verringert.

In einer alternativen vorteilhaften Weiterbildung des Verfahrens wird der Parameter des Referenzsystems so gewählt, dass er einem langsamsten akzeptablen pneumatischen System entspricht. Hier wird die effektive Referenzventilöffnungszeit über das Referenzsystem als möglichst lang gewählt, so dass die effektive Ventilöffnungszeit durch die Korrekturzeit einen Wert annimmt, der sicherstellt, dass ein funktional ausreichendes Minimum der Druckänderung erreicht wird.

In einer weiteren vorteilhaften Weiterbildung des Verfahrens wird eine Funktion berücksichtigt, die den Zusammenhang zwischen einer Ansteuerdauer und der effektiven Ventilöffnungszeit darstellt. Dieser Zusammenhang kann entweder durch eine lineare Funktion ausgedrückt werden, oder auch überproportional oder unterproportional ansteigen. In diesem Fall muss bei einem Ventilwechsel nur dieser Zusammenhang angepasst werden.

Gemäß einer vorteilhaften Weiterbildung des Verfahrens wird bei jedem Signal einer effektiven Ventilöffnungszeit, bei dem eine Richtung der Druckänderung gleich bleibt, bei dem also der Druck im pneumatischen System entweder kontinuierlich erhöht oder alternativ kontinuierlich verringert wird, der Korrekturwert in der Vorrichtung ermittelt und aufsummiert, so dass sich die effektive Ventilöffnungszeit der tatsächlich erforderlichen effektiven Ventilöffnungszeit annähert. Hierbei wird bei jedem Bremsvorgang und bei jedem Entlüften des Bremssystems die effektive Ventilöffnungszeit an den aktuellen Zustand des Bremssystems angepasst. Dadurch ist gewährleistet, dass neben strukturellen Einflüssen auf die Ventilöffnungszeit auch aktuell auftretende Veränderungen berücksichtigt werden.

Entsprechend einer vorteilhaften Weiterbildung des Verfahrens wird der aufsummierte Korrekturwert auf null zurückgesetzt, wenn eine Bremsenansteuerung von Belüften auf Entlüften, oder von Entlüften auf Belüften geändert wird. Hierbei wird sichergestellt, dass die effektive Ventilöffnungszeit möglichst schnell auf die tatsächlich erforderliche Ventilöffnungszeit korrigiert wird, ohne dass ein zu hoher Bremsdruck auftritt, der eine zu große Bremswirkung verursachen würde.

In einer vorteilhaften Weiterbildung des Verfahrens wird das Verfahren mit einer erfindungsgemäßen Vorrichtung ausgeführt.

Nachfolgend werden unter Bezugnahme auf die beigefügten Zeichnungen ein Prinzip und ein Ausführungsbeispiel der Erfindung gezeigt. Dabei zeigen:
- Fig. 1: einen prinzipiellen Aufbau eines erfindungsgemäßen Bremssystems, und
- Fig. 2: einen Aufbau eines Bremssystems mit einer Ausführungsform der erfindungsgemäßen Korrekturvorrichtung.

Das Bremsen bzw. Lösen einer Bremse eines Bremssystems erfolgt durch Ausgeben von Impulsen durch eine Steuerungseinrichtung des Bremssystems. Dabei wird ein Bremsvorgang durch das Ausgeben eines ersten Bremsimpulses über eine gewisse Zeitdauer, aus der eine effektive Ventilöffnungszeit folgt, während der das Bremssystem belüftet wird, ausgelöst. Für eine Veränderung der Bremskraft wird dann ein weiterer Bremsimpuls für eine effektive Ventilöffnungszeit ausgegeben, mittels dessen das Bremssystem weiter belüftet, also der Druck an der Bremse erhöht wird, oder mittels dessen das Bremssystem entlüftet, also der Druck an der Bremse verringert wird. Ein Zustand nach dem weiteren Bremsimpuls und nach allen nachfolgenden Bremsimpulsen wird im Folgenden als "nach einer aktuell eingegebenen effektiven Ventilöffnungszeit" bezeichnet. Der Zustand nach dem ersten Bremsimpuls und nach den direkt vor den weiteren aktuell eingegebenen effektiven Ventilöffnungszeiten wird im Folgenden mit "nach einer zuletzt eingegebenen effektiven Ventilöffnungszeit" bezeichnet. Bei einem Interpretieren des ersten Bremsimpulses als die aktuelle Ventilöffnungszeit wird der Zustand vor dem ersten Bremsimpuls als der Zustand nach der zuletzt eingegebenen effektiven Öffnungszeit angesehen.

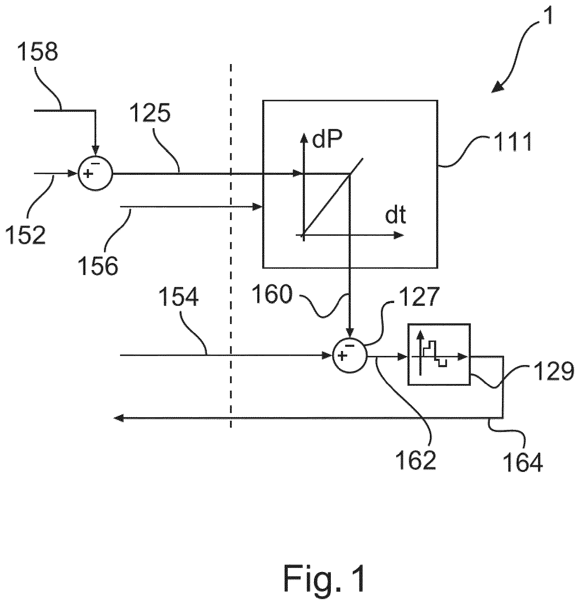

In **Fig. 1** ist ein prinzipieller Aufbau einer erfindungsgemäßen Korrekturvorrichtung 1 in einem Bremssystem für eine Wirküberwachung einer vorgegebenen effektiven Ventilöffnungszeit und für eine Korrektur der vorgegebenen effektiven Ventilöffnungszeit gezeigt.

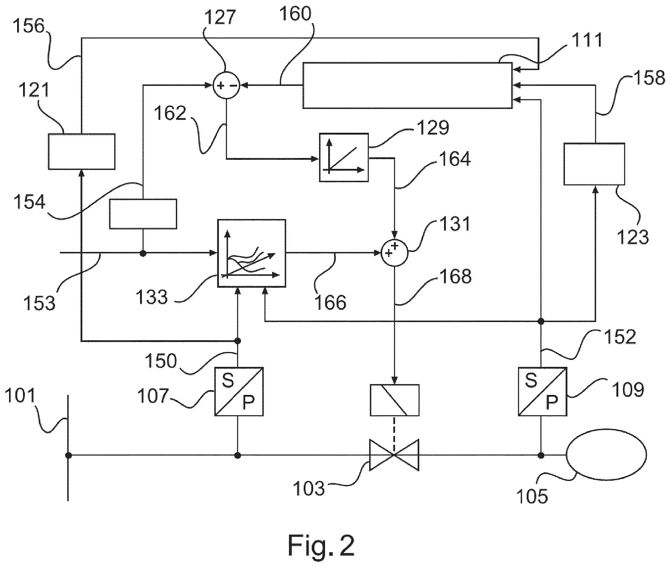

Die Korrekturvorrichtung 1 weist einen Eingang für eine Druckdifferenz 125 zwischen einem Druck 152 nach einem Ventil 103 (Fig. 2) nach einer aktuell eingegebenen effektiven Ventilöffnungszeit 153 (Fig. 2) und einem Druck 158 nach dem Ventil 103 (Fig. 2) nach einer zuletzt eingegebenen effektiven Ventilöffnungszeit 154 auf.

Ferner weist die Korrekturvorrichtung 1 einen Eingang für einen Druck 156 vor dem Ventil 103 (Fig. 2) nach der zuletzt eingegebenen effektiven Ventilöffnungszeit 154 auf.

Des Weiteren ist in der Korrekturvorrichtung 1 ein Referenzsystem 111 an einem Toleranzrand eines "langsamsten Systems" vorgesehen, das aus einem Parameter, der die pneumatischen Eigenschaften eines Referenzsystems 111 festlegt, der Druckdifferenz 125 und dem Druck 156 vordem Ventil 103 (Fig. 2) vor der zuletzt eingegebenen effektiven Ventilöffnungszeit 154 eine effektive Referenzventilöffnungszeit 160 bestimmt.

Darüber hinaus weist die Korrekturvorrichtung 1 eine

Korrekturzeitbestimmungseinrichtung 127 auf, die eine Korrekturzeit 162 (Fig. 2) aus der Differenz zwischen der effektiven Referenzventilöffnungszeit 160 und der zuletzt eingegebenen effektiven Ventilöffnungszeit 154 bestimmt.

Die Korrekturvorrichtung 1 ist ferner mit einer Additionseinrichtung 129 versehen, die die Korrekturzeiten 162 nach jeder Vorgabe der effektiven Ventilöffnungszeit zu einer aufsummierten Korrekturzeit 164 aufsummiert.

Schließlich ist die Korrekturvorrichtung 1 mit einem Signalausgang für eine Ausgabe der aufsummierten Korrekturzeit 164 an die Systemsteuerung versehen.

Nach jedem Stellvorgang, also nach der erneuten Vorgabe der effektiven Ventilöffnungszeit, ermittelt die Korrekturvorrichtung 1 aus der Druckdifferenz 125 nach dem Ventil 103 (Fig. 2) zwischen dem Druck 152 nach der aktuell eingegebenen effektiven Ventilöffnungszeit 153 (Fig. 2) und dem Druck 158 nach der zuletzt eingegebenen effektiven Ventilöffnungszeit 154, dem Druck 156 vor dem Ventil 103 (Fig. 2) nach der zuletzt eingegebenen effektiven Ventilöffnungszeit 154 und dem Parameter, der die pneumatischen Eigenschaften eines Referenzsystems festlegt, die effektive Referenzventilöffnungszeit 160 für ein Referenzsystem 111 an der Toleranzgrenze, an welcher der Druckanstieg während der Ventilöffnungszeit minimal ist. Diese effektive Referenzventilöffnungszeit 160 sagt aus, wie lange ein Ventil des theoretischen Referenzsystems virtuell offen war, um die gemessene Druckänderung zu bewirken. Die zuletzt vorgegebene effektive Ventilöffnungszeit 154 wird mit der berechneten effektiven Referenzventilöffnungszeit 160 verglichen, und aus der Differenz wird bestimmt, ob die Ansteuerdauer der letzten effektiven Ventilöffnungszeit 154 passend war. Bei einer Abweichung zwischen der zuletzt eingegebenen effektiven Ventilöffnungszeit 154 und der berechneten effektiven Referenzventilöffnungszeit 160 wird eine Korrekturzeit 162 berechnet und für jeden Zyklus in der Additionseinrichtung 129 als aufsummierte Korrekturzeit 164 aufsummiert. Die aufsummierte Korrekturzeit 164 wird dann der Steuerungsvorrichtung für eine Korrektur der nächsten vorgegebenen effektiven Ventilöffnungszeit zur Verfügung gestellt.

**Fig. 2** zeigt einen Aufbau einer Ausführungsform des Bremssystems mit der Korrekturvorrichtung 1.

Das Bremssystem weist eine Druckleitung 101 zum Zuführen eines Versorgungsdrucks auf. Ferner ist das Ventil 103, das mit der Druckleitung 101 verbunden ist, vorgesehen, um ein nach dem Ventil 103 befindliches Volumen 105 für eine gewünschte Bremswirkung mit einem gewünschten Druck zu versorgen. Vordem Ventil 103, also von dem Ventil 103 aus auf der Seite der Druckleitung 101, ist ein Drucksensor 107 vorgesehen, um einen Druck 150 vordem Ventil 103 zu erfassen. Nach dem Ventil 103, also von dem Ventil 103 aus auf der Seite des Volumens 105, ist ein weiterer Drucksensor 109 vorgesehen, um einen Druck 152 nach dem Ventil 103 zu erfassen.

Das Bremssystem ist mit einer Signaleingangsschnittstelle für eine Vorgabe der aktuellen effektiven Ventilöffnungszeit 153, mit einer Signaleingangsschnittstelle für den Druck 150 vor dem Ventil 103 und einer Signaleingangsschnittstelle für den Druck 152 nach dem Ventil 103 versehen. Ferner ist das Bremssystem mit einer Speichereinrichtung für den Parameter versehen, der die pneumatischen Eigenschaften eines Referenzsystems 111 festlegt. Darüber hinaus ist das Bremssystem mit einer Speichereinrichtung 121 zum Speichern des Drucks 156 vordem Ventil 103 nach der zuletzt eingegebenen effektiven Ventilöffnungszeit 154 sowie mit einer Speichereinrichtung 123 zum Speichern des Drucks 158 nach dem Ventil 103 nach der zuletzt eingegebenen effektiven Ventilöffnungszeit 154 versehen.

Das Bremssystem weist außerdem eine Berechnungseinrichtung auf, die die Druckdifferenz 125 (Fig. 1) zwischen dem Druck 158 nach dem Ventil 103 nach der zuletzt eingegebenen effektiven Ventilöffnungszeit 154 und dem Druck 152 nach dem Ventil 103 nach der aktuell eingegebenen effektiven Ventilöffnungszeit 153 berechnet, auf.

Ferner ist in dem Bremssystem eine Ventilöffnungszeitbestimmungseinrichtung vorgesehen, die aus der Druckdifferenz 125 (Fig. 1) zwischen dem Druck 158 nach dem Ventil 103 nach der zuletzt eingegebenen effektiven Ventilöffnungszeit 154 und dem Druck 152 nach dem Ventil 103 nach der aktuell eingegebenen effektiven Ventilöffnungszeit 153, dem Druck 156 vor dem Ventil 103 nach der zuletzt eingegebenen effektiven Ventilöffnungszeit 154 und dem Parameter, der die pneumatischen Eigenschaften des Referenzsystems 111 festlegt, die effektive Referenzventilöffnungszeit 160 bestimmt.

Außerdem ist in der Korrekturvorrichtung 1 eine Korrekturzeitbestimmungseinrichtung 127 enthalten, die aus einer Differenz der zuletzt eingegebenen effektiven Ventilöffnungszeit 154 und der effektiven Referenzventilöffnungszeit 160 eine Korrekturzeit 162 bestimmt.

Weiterhin ist noch eine Additionseinrichtung 129 vorgesehen, die die Korrekturzeiten 162 nach jeder aktuell eingegebenen effektiven Ventilöffnungszeit 153 in einer aufsummierten Korrekturzeit 164 aufsummiert.

Das Bremssystem ist ferner mit einer Ventildynamik-Speicher- und Berechnungseinrichtung 133 versehen, mittels derer aus der Vorgabe der aktuell eingegebenen effektiven Ventilöffnungszeit 153 eine vorläufige Stellgröße 166 berechnet wird.

Schließlich ist in dem Bremssystem noch eine weitere Additionseinrichtung 131 vorgesehen, die die vorläufige Stellgröße 166 mit der aufsummierten Korrekturzeit 164 addiert, und dann eine endgültige Stellgröße 168 basierend auf der effektiven Ventilöffnungszeit 154 an das Ventil 103 ausgibt.

Durch die Steuerungsvorrichtung wird ein Anfangswert für eine aktuell eingegebene effektive Ventilöffnungszeit 153 vorgegeben. Dieser Anfangswert für die aktuell eingegebene effektive Ventilöffnungszeit 153 wird optional mit einer Zeitkonstante bestimmt, die einem schnellsten zu erwartenden pneumatischen System entspricht, was eine kürzest-mögliche aktuell eingegebene effektive Ventilöffnungszeit 153 ergibt. Dadurch wird erreicht, dass ein Druck nach dem Ventil 103 in einem ersten Zyklus des Korrekturverfahrens nicht übermäßig ansteigt, wobei er gegebenenfalls sogar über einem maximal erforderlichen Druck liegt, so dass ein Annähern an den tatsächlich erforderlichen Druck ohne Überschwingen möglich ist, das Annähern zügig erfolgt und ein Druckluftverbrauch geringer ist.

Auf der Basis der bekannten Ventildynamik wird aus der aktuell eingegebenen effektiven Ventilöffnungszeit 153 durch die Ventildynamik-Speicher- und Berechnungseinrichtung 133 für eine Ventildynamik die vorläufige Stellgröße 166 berechnet.

Die vorläufige Stellgröße 166 wird durch die weitere Additionseinrichtung 131 mit der aufsummierten Korrekturzeit 164 addiert und als endgültige Stellgröße 168 an das Ventil 103 ausgegeben.

Die aufsummierte Korrekturzeit 164 wird durch die Additionseinrichtung 129 aus den für die einzelnen vorgegebenen effektiven Ventilöffnungszeiten ermittelten Korrekturzeiten 162 berechnet. Die aufsummierte Korrekturzeit 164 wird bei einer Richtungsänderung der Ansteuerung, wenn eine Bremsenansteuerung von Belüften auf Entlüften, oder von Entlüften auf Belüften geändert wird, auf null zurückgesetzt. Wenn zwischen zwei vorgegebenen effektiven Ventilöffnungszeiten der Druck im Volumen 105 nur gehalten wird, bleibt der Wert der aufsummierten Korrekturzeit 164 bestehen.

Die Korrekturzeiten 162 werden wiederum durch die Korrekturzeitbestimmungseinrichtung 127 aus der Differenz zwischen der zuletzt eingegebenen effektiven Ventilöffnungszeit 154 und der effektiven Referenzventilöffnungszeit 160 gebildet.

Die effektive Referenzventilöffnungszeit 160 wird in dem Referenzsystem 111 an der Toleranzgrenze aus der Druckdifferenz 125 (Fig. 1) zwischen dem Druck 158 nach dem Ventil 103 nach der zuletzt eingegebenen effektiven Ventilöffnungszeit 154 und dem Druck 152 nach dem Ventil 103 nach einer aktuell eingegebenen effektiven Ventilöffnungszeit 153, dem Druck 156 vordem Ventil 103 nach der zuletzt eingegebenen effektiven Ventilöffnungszeit 154 und dem Parameter, der die pneumatischen Eigenschaften des Referenzsystems 111 festlegt, bestimmt.

### BEZUGSZEICHENLISTE

- 1: Korrekturvorrichtung
- 101: Druckleitung
- 103: Ventil
- 105: Volumen
- 107: Drucksensor
- 109: Drucksensor
- 111: Referenzsystem
- 121: Speichereinrichtung
- 123: Speichereinrichtung
- 125: Druckdifferenz
- 127: Korrekturzeitbestimmungseinrichtung
- 129: Additionseinrichtung
- 131: Additionseinrichtung
- 133: Ventildynamik-Speicher- und Berechnungseinrichtung
- 150: Druck vor Ventil nach einer aktuell eingegebenen effektiven Ventilöffnungszeit
- 152: Druck nach Ventil nach einer aktuell eingegebenen effektiven Ventilöffnungszeit
- 153: aktuelle Vorgabe der effektiven Ventilöffnungszeit
- 154: zuletzt eingegebene Vorgabe der effektiven Ventilöffnungszeit
- 156: Druck vor Ventil nach der zuletzt eingegebenen effektiven Ventilöffnungszeit
- 158: Druck nach Ventil nach der zuletzt eingegebenen effektiven Ventilöffnungszeit
- 160: effektive Referenzventilöffnungszeit
- 162: Korrekturzeit
- 164: aufsummierte Korrekturzeit
- 166: vorläufige Stellgröße
- 168: endgültige Stellgröße

## Patentansprüche

1. Pneumatisches Bremssystem mit einer Korrekturvorrichtung (1) einer Öffnungszeit eines Ventils (103) des pneumatischen Bremssystems, aufweisend
eine Signaleingangsschnittstelle für ein Signal einer zuletzt eingegebenen effektiven Ventilöffnungszeit (154),
eine Signaleingangsschnittstelle für einen Druck (156) vor dem Ventil (103) nach der zuletzt eingegebenen effektiven Ventilöffnungszeit (154),
eine Signaleingangsschnittstelle für eine Druckdifferenz (125) zwischen einem Druck (152) nach einer aktuellen Vorgabe der effektiven Ventilöffnungszeit (153) nach dem Ventil (103) und einem Druck (158) nach der zuletzt eingegebenen Vorgabe der effektiven Ventilöffnungszeit (154) nach dem Ventil (103),
eine Ventilöffnungszeitbestimmungseinrichtung, die konfiguriert ist, eine effektive Referenzsystemventilöffnungszeit (160) aus der Druckdifferenz (125) nach dem Ventil (103), dem Druck (156) nach der zuletzt eingegebenen Vorgabe der effektiven Ventilöffnungszeit (154) vor dem Ventil (103) und einem Parameter eines Referenzsystems (111), der die pneumatischen Eigenschaften des Referenzsystems (111) festlegt, zu bestimmen,
eine Korrekturzeitbestimmungseinrichtung (127), die konfiguriert ist, eine Korrekturzeit (162) aus einer Differenz zwischen der zuletzt eingegebenen effektiven Ventilöffnungszeit (154) und der effektiven Referenzsystemventilöffnungszeit (160) zu bestimmen,
eine Additionseinrichtung (129), die konfiguriert ist, die Korrekturzeiten (162) nach einer aktuellen effektiven Ventilöffnungszeit (153) zu einer aufsummierten Korrekturzeit (164) aufzusummieren,
einen Signalausgang für die aufsummierte Korrekturzeit (164), mit der die aktuelle effektive Ventilöffnungszeit (153) korrigiert wird.

2. Bremssystem gemäß Anspruch 1, ferner aufweisend
eine Signaleingangsschnittstelle für ein Signal der aktuellen effektiven Ventilöffnungszeit (153) für das Ventil (103) des pneumatischen Bremssystems,
eine Signaleingangsschnittstelle für den Druck (158) nach dem Ventil (103) nach der zuletzt eingegebenen effektiven Ventilöffnungszeit (154),
eine Signaleingangsschnittstelle für einen Druck (152) nach dem Ventil (103) nach der aktuell eingegebenen effektiven Ventilöffnungszeit 153,
eine Speichereinrichtung, in der der Parameter, der die pneumatischen Eigenschaften eines Referenzsystems (111) festlegt, abgespeichert ist,
eine Speichereinrichtung (121), die den Druck (156) nach der zuletzt eingegebenen Vorgabe der effektiven Ventilöffnungszeit (154) vor dem Ventil (103) abspeichert,
eine Speichereinrichtung (123), die den Druck (152) nach der zuletzt eingegebenen Vorgabe der effektiven Ventilöffnungszeit (154) nach dem Ventil (103) abspeichert, und
eine Berechnungseinrichtung, die eine Druckdifferenz (125) zwischen dem Druck (152) nach dem Ventil (103) und dem Druck (158) nach der zuletzt eingegebenen Vorgabe der effektiven Ventilöffnungszeit (154) nach dem Ventil (103) berechnet.

3. Bremssystem gemäß Anspruch 1 oder 2, wobei
der Parameter des Referenzsystems (111) eine Ventilcharakteristik und/oder ein Volumen (105) des Bremssystems nach dem Ventil (103) und/oder einen pneumatischen Leitwert enthält.

4. Bremssystem gemäß einem der vorangehenden Ansprüche, wobei
der Parameter so festgelegt sind, dass die pneumatischen Eigenschaften des Referenzsystems (111) denen des pneumatischen Bremssystems entsprechen.

5. Bremssystem gemäß einem der Ansprüche 1 bis 3, wobei
der Parameter so festgelegt ist, dass die pneumatischen Eigenschaften des Referenzsystems (111) denen eines langsamsten zulässigen Referenzsystems entsprechen.

6. Verfahren zum Korrigieren einer Ventilöffnungszeit eines Ventils (103) in einem pneumatischen Bremssystems mit den folgenden Schritten:
Bestimmen eines Referenzsystems (111) mit einem Parameter, der die pneumatischen Eigenschaften des Referenzsystems (111) festlegt,
Erfassen und Speichern eines Drucks (156) in dem pneumatischen Bremssystem nach einer zuletzt eingegebenen Vorgabe einer effektiven Ventilöffnungszeit (154) vor dem Ventil (103),
Erfassen und Speichern eines Drucks (158) in dem pneumatischen Bremssystem nach der zuletzt eingegebenen Vorgabe der effektiven Ventilöffnungszeit (154) nach dem Ventil,
Bestimmen einer effektiven aktuellen Ventilöffnungszeit (153) durch eine Steuerungseinrichtung,
Ansteuern des Ventils (103) mit der effektiven Ventilöffnungszeit (153),
Erfassen des Drucks (152) in dem pneumatischen Bremssystem nach der aktuell eingegebenen Vorgabe der effektiven Ventilöffnungszeit (153) nach dem Ventil (103),
Berechnen einer Druckdifferenz (125) des Drucks (152) nach der aktuell eingegebenen Vorgabe der effektiven Ventilöffnungszeit (153) und des Drucks (158) nach der zuletzt eingegebenen Vorgabe der effektiven Ventilöffnungszeit (154) nach dem Ventil (103),
Bestimmen der effektiven Referenzsystemventilöffnungszeit (160) aus der Druckdifferenz (125) nach dem Ventil (103), dem Druck (156) nach der zuletzt eingegebenen Vorgabe der effektiven Ventilöffnungszeit (154) vor dem Ventil, und dem Parameter, der die pneumatischen Eigenschaften des Referenzsystems (111) festlegt,
Bestimmen einer Korrekturzeit (162) in Abhängigkeit von einer Differenz zwischen der aktuellen vorgegebenen effektiven Ventilöffnungszeit (153) und der effektiven Referenzsystemventilöffnungszeit (160),
Aufsummieren der Korrekturzeit (162) zu einer aufsummierten Korrekturzeit (164),
Ausgeben der aufsummierten Korrekturzeit (164),
Korrigieren der nächsten Vorgabe der effektiven Ventilöffnungszeit mit der aufsummierten Korrekturzeit (164).

7. Verfahren gemäß Anspruch 6, wo die die Korrekturzeit als eine Differenz zwischen der effektiven Ventilöffnungszeit und der effektiven Referenzventilöffnungszeit bestimmt wird.

8. Verfahren gemäß Anspruch 6 oder 7, mit dem Schritt
Bestimmen eines Anfangswerts der effektiven Ventilöffnungszeit mit einer Zeitkonstante, die einem schnellsten zu erwartenden pneumatischen Bremssystem entspricht.

9. Verfahren gemäß einem der Ansprüche 6 bis 8, wobei der Parameter des Referenzsystems (111) so gewählt wird, dass er einem tatsächlichen pneumatischen System entspricht.

10. Verfahren gemäß einem der Ansprüche 6 bis 8, wobei der Parameter des Referenzsystems (111) so gewählt wird, dass er einem langsamsten zu erwartenden pneumatischen System entspricht.

11. Verfahren gemäß einem der Ansprüche 6 bis 10, wobei eine Funktion berücksichtigt wird, die den Zusammenhang zwischen einer Ansteuerdauer und der effektiven Öffnungszeit des Ventils (103) zur Verfügung stellt.

12. Verfahren gemäß einem der Ansprüche 6 bis 11, wobei die Korrekturzeit (162) bei jeder Eingabe einer aktuellen effektiven Ventilöffnungszeit (153), bei dem eine Richtung der Druckänderung gleichbleibt, aufsummiert wird, so dass sich die aktuelle effektive Ventilöffnungszeit (153) der tatsächlich erforderlichen Ventilöffnungszeit annähert.

13. Verfahren gemäß einem der Ansprüche 6 bis 12, wobei die aufsummierte Korrekturzeit (164) auf null zurückgesetzt wird, wenn eine Ansteuerung von Belüften auf Entlüften oder von Entlüften auf Belüften geändert wird.

14. Verfahren gemäß einem der Ansprüche 6 bis 13, wobei das Verfahren in einem Bremssystem gemäß einem der Ansprüche 1 bis 5 ausgeführt wird.

## Claims

1. Brake system comprising a correction apparatus (1) for an opening time of a valve (103) of the pneumatic brake system, having
a signal input interface for a signal of a most recently input effective valve opening time (154),
a signal input interface for a pressure (156) upstream of the valve (103) after the most recently input effective valve opening time (154),
a signal input interface for a pressure difference (125) between a pressure (152) after a current specification of the effective valve opening time (153) downstream of the valve (103) and a pressure (158) after the most recently input specification of the effective valve opening time (154) downstream of the valve (103),
a valve opening time determination device which is configured to determine an effective reference system valve opening time (160) from the pressure difference (125) downstream of the valve (103), the pressure (156) after the most recently input specification of the effective valve opening time (154) upstream of the valve (103) and a parameter of a reference system (111), which parameter defines the pneumatic properties of the reference system (111),
a correction time determination device (127) which is configured to determine a correction time (162) from a difference between the most recently input effective valve opening time (154) and the effective reference system valve opening time (160),
an addition device (129) which is configured to add up the correction times (162) after a current effective valve opening time (153) to form an added-up correction time (164),
a signal output for the added-up correction time (164) with which the current effective valve opening time (153) is corrected.

2. Brake system according to claim 1, further having
a signal input interface for a signal of the current effective valve opening time (153) for the valve (103) of the pneumatic brake system,
a signal input interface for the pressure (158) downstream of the valve (103) after the most recently input effective valve opening time (154),
a signal input interface for a pressure (152) downstream of the valve (103) after the currently input effective valve opening time 153,
a storage device in which the parameter which defines the pneumatic properties of a reference system (111) is stored,
a storage device (121) which stores the pressure (156) after the most recently input specification of the effective valve opening time (154) upstream of the valve (103),
a storage device (123) which stores the pressure (152) after the most recently input specification of the effective valve opening time (154) downstream of the valve (103), and
a calculation device which calculates a pressure difference (125) between the pressure (152) downstream of the valve (103) and the pressure (158) after the most recently input specification of the effective valve opening time (154) downstream of the valve (103).

3. Brake system according to claim 1 or 2, wherein
the parameter of the reference system (111) contains a valve characteristic and/or a volume (105) of the brake system downstream of the valve (103) and/or a pneumatic conductance.

4. Brake system according to any of the preceding claims, wherein
the parameter are defined such that the pneumatic properties of the reference system (111) correspond to those of the pneumatic brake system.

5. Brake system according to any of claims 1 to 3, wherein
the parameter is defined such that the pneumatic properties of the reference system (111) correspond to those of a slowest permissible reference system.

6. Method for correcting a valve opening time of a valve (103) in a pneumatic brake system, comprising the following steps:
determining a reference system (111) with a parameter which defines the pneumatic properties of the reference system (111),
detecting and storing a pressure (156) in the pneumatic brake system after a most recently input specification of an effective valve opening time (154) upstream of the valve (103),
detecting and storing a pressure (158) in the pneumatic brake system after the most recently input specification of the effective valve opening time (154) downstream of the valve,
determining an effective current valve opening time (153) using a control device,
actuating the valve (103) with the effective valve opening time (153),
detecting the pressure (152) in the pneumatic brake system after the currently input specification of the effective valve opening time (153) downstream of the valve (103),
calculating a pressure difference (125) between the pressure (152) after the currently input specification of the effective valve opening time (153) and the pressure (158) after the most recently input specification of the effective valve opening time (154) downstream of the valve (103),
determining the effective reference system valve opening time (160) from the pressure difference (125) downstream of the valve (103), the pressure (156) after the most recently input specification of the effective valve opening time (154) upstream of the valve, and the parameter which defines the pneumatic properties of the reference system (111),
determining a correction time (162) depending on a difference between the currently specified effective valve opening time (153) and the effective reference system valve opening time (160),
adding up the correction time (162) to form an added-up correction time (164),
outputting the added-up correction time (164),
correcting the next specification of the effective valve opening time with the added-up correction time (164).

7. Method according to claim 6, where the correction time is determined as a difference between the effective valve opening time and the effective reference valve opening time.

8. Method according to claim 6 or 7, comprising the step of
determining a starting value of the effective valve opening time with a time constant which corresponds to a fastest expected pneumatic brake system.

9. Method according to any of claims 6 to 8, wherein the parameter of the reference system (111) is selected such that it corresponds to an actual pneumatic system.

10. Method according to any of claims 6 to 8, wherein the parameter of the reference system (111) is selected such that it corresponds to a slowest expected pneumatic system.

11. Method according to any of claims 6 to 10, wherein a function which makes available the relationship between an actuation period and the effective opening time of the valve (103) is taken into consideration.

12. Method according to any of claims 6 to 11, wherein the connection time (162) is added up each time a current effective valve opening time (153) in which a direction of the change in pressure remains the same is input, so that the current effective valve opening time (153) approximates the actually required valve opening time.

13. Method according to any of claims 6 to 12, wherein the added-up correction time (164) is reset to zero when a changeover in actuation is made from ventilating to venting or from venting to ventilating.

14. Method according to any of claims 6 to 13, wherein the method is executed in a brake system according to any of claims 1 to 5.

## Revendications

1. Système de freinage pneumatique ayant un dispositif (1) de correction d'un temps d'ouverture d'une soupape (103) du système de freinage pneumatique, comportant
une interface d'entrée de signal pour un signal d'un temps (154) effectif entré en dernier d'ouverture de la soupape,
une interface d'entrée de signal pour une pression (156) avant la soupape (103) après le temps (154) effectif entré en dernier d'ouverture de la soupape,
une interface d'entrée de signal pour une différence (125) de pression entre une pression (152), suivant une prescription en cours du temps (153) effectif d'ouverture de la soupape, après la soupape (103) et une pression (158), suivant la prescription entrée en dernier du temps (154) effectif d'ouverture de la soupape, après la soupape (103),
un dispositif de détermination du temps d'ouverture de la soupape, qui est configuré, pour déterminer un temps (160) effectif d'ouverture de la soupape de système de référence, à partir de la différence (125) de pression après la soupape (103), de la pression (156), suivant la prescription entrée en dernier de temps (154) effectif d'ouverture de la soupape, avant la soupape (103) et d'un paramètre d'un système (111) de référence, qui fixe des propriétés pneumatiques du système (111) de référence,
un dispositif (127) de détermination du temps de correction, qui est configuré pour déterminer un temps (162) de correction, à partir d'une différence entre le temps (154) effectif entré en dernier d'ouverture de la soupape et le temps (160) effectif d'ouverture de la soupape de système de référence,
un dispositif (129) d'addition, qui est configuré pour faire la somme des temps (162) de correction, après un temps (153) effectif en cours d'ouverture de la soupape, en un temps (164) de correction sommé,
une sortie de signal, pour le temps (164) de correction sommé, par lequel on corrige le temps (153) effectif en cours d'ouverture de la soupape.

2. Système de freinage suivant la revendication 1, comportant en outre
une interface d'entrée de signal pour un signal du temps (153) effectif en cours d'ouverture de la soupape (103) du système de freinage pneumatique,
une interface d'entrée de signal pour la pression (158) après la soupape (103) après le temps (154) effectif entré en dernier d'ouverture de la soupape,
une interface d'entrée de signal pour une pression (152) après la soupape (103) après le temps (153) effectif entré en cours de l'ouverture de la soupape,
un dispositif de mise en mémoire, dans lequel le paramètre, qui fixe les propriétés pneumatiques d'un système (111) de référence est mis en mémoire,
un dispositif (121) de mise en mémoire, qui met en mémoire la pression (156), suivant la prescription entrée en dernier du temps (154) effectif d'ouverture de la soupape, avant la soupape (103),
un dispositif (123) de mise en mémoire, qui met en mémoire la pression (152), suivant la prescription entrée en dernier du temps (154) effectif d'ouverture de la soupape, après la soupape (103), et
un dispositif de calcul, qui calcule une différence (125) de pression entre la pression (152) après la soupape (103) et la pression (158), suivant la prescription entrée en dernier du temps (154) effectif d'ouverture de la soupape, après la soupape (103).

3. Système de freinage suivant la revendication 1 ou 2,
dans lequel le paramètre du système (111) de référence contient une caractéristique de la soupape et/ou un volume (105) du système de freinage après la soupape (103) et/ou une conductance pneumatique.

4. Système de freinage suivant l'une des revendications précédentes, dans lequel
le paramètre est fixé de manière à ce que les propriétés pneumatiques du système (111) de référence correspondent à celles du système de freinage pneumatique.

5. Système de freinage suivant l'une des revendications 1 à 3, dans lequel
le paramètre est fixé de manière à ce que les propriétés pneumatiques du système (111) de référence correspondent à un système de référence admissible le plus lent.

6. Procédé de correction du temps d'ouverture d'une soupape (103) d'un système de freinage pneumatique comprenant les stades suivants :
on détermine un système (111) de référence ayant un paramètre, qui fixe les propriétés pneumatique du système (111) de référence,
on relève et on met en mémoire une pression (156) dans le système de freinage pneumatique, suivant une prescription entrée en dernier d'un temps (154) effectif d'ouverture de la soupape, avant la soupape (103),
on relève et on met en mémoire une pression (158) dans le système de freinage pneumatique, suivant une prescription entrée en dernier du temps (154) effectif d'ouverture de la soupape, après la soupape,
on détermine un temps (153) effectif en cours d'ouverture de la soupape par un dispositif de commande,
on commande la soupape (103) par le temps (153) effectif d'ouverture de la soupape,
on relève la pression (152) dans le système de freinage pneumatique, suivant la prescription entrée en cours du temps (153) effectif d'ouverture de la soupape, après la soupape (103),
on calcule une différence (125) de la pression (152), suivant la prescription entrée en cours du temps (153) effectif d'ouverture de la soupape et la pression (158) suivant la prescription entrée en dernier du temps (154) effectif d'ouverture de la soupape, après la soupape (103),
on détermine le temps (160) effectif d'ouverture de la soupape de système de référence à partir de la différence (125) de pression après la soupape (103), de la pression (156), suivant la prescription entrée en dernier du temps (154) effectif d'ouverture de la soupape, avant la soupape et du paramètre, qui fixe les propriétés pneumatiques du système (111) de référence,
on détermine un temps (162) de correction en fonction d'une différence entre le temps (153) effectif prescrit en cours d'ouverture de la soupape et le temps (160) effectif d'ouverture de la soupape de système de référence,
on fait la somme du temps (162) de correction en un temps (164) de correction sommé,
on émet le temps (164) de correction sommé,
on corrige la prescription suivante du temps effectif d'ouverture de la soupape par le temps (164) de correction sommé.

7. Procédé suivant la revendication 6, dans lequel on détermine le temps de correction sous la forme d'une différence entre le temps effectif d'ouverture de la soupape et le temps effectif d'ouverture de la soupape de référence.

8. Procédé suivant la revendication 6 ou 7, comprenant le stade on détermine une valeur initiale du temps effectif d'ouverture de la soupape avec une constante de temps, qui correspond à un système de freinage de pneumatique escompté le plus rapide.

9. Procédé suivant l'une des revendications 6 à 8, dans lequel on choisit le paramètre du système (111) de référence, de manière à ce qu'il corresponde à un système pneumatique réel.

10. Procédé suivant l'une des revendications 6 à 8, dans lequel on choisit le paramètre du système (111) de référence, de manière à ce qu'il corresponde à un système pneumatique escompté le plus lent.

11. Procédé suivant l'une des revendications 6 à 10, dans lequel on prend en compte une fonction, qui met à disposition la relation entre la durée de commande et le temps effectif d'ouverture de la soupape (103).

12. Procédé suivant l'une des revendications 6 à 11, dans lequel on fait la somme du temps (162) de correction pour chaque entrée d'un temps (153) effectif en cours d'ouverture de la soupape, pour lequel un sens de variation de la pression reste le même, de manière à ce que le temps (153) effectif d'ouverture de la soupape se rapproche du temps d'ouverture de la soupape nécessaire réellement.

13. Procédé suivant l'une des revendications 6 à 12, dans lequel on remet à zéro le temps (164) de correction sommé si on est passé d'une commande d'une alimentation en air à une purge ou d'une purge à alimentation en air.

14. Procédé suivant l'une des revendications 6 à 13, dans lequel on effectue le procédé dans un système de freinage suivant l'une des revendications 1 à 5.
